# EUROPEAN PATENT APPLICATION

(11) **EP 1 398 975 A1**
(43) Date of publication of application: **17.03.2004**
(21) Application number: 02360260.0
(22) Date of filing: 04.09.2002
(51) Int. Cl.: H04Q 3/00, H04Q 7/34

(54) **Method for maintaining a radio network having elements coming from more than one supplier, and components therefor**

(71) Applicant: ALCATEL, 75008 Paris (FR)
(72) Inventor: Cambray de, Béatrix, 75016 Paris (FR); Houllier, Jean-Roch, 91240 Saimt-Michel sur Orge (FR)
(74) Representative: Richardt, Markus Albert

(57) **Abstract**

The invention relates to a radio network optimisation system for a cellular telecommunication system (1), the cellular telecommunication system having at least first and second types of cells (2, 3, 4), the radio network optimisation system comprising:
- means for inputting (8) of a first type of data comprising radio resource configuration parameters and / or quality of service indicators of the first type of cell and of a second type of data comprising radio resource configuration parameters and / or quality of service indicators of the second type of cell,
- database means (8) implementing a data model (9) of the at least first and second types of data, the database means being adapted to be coupled to the means for inputting of the first and second types of data,
- a radio network optimisation tool (10) being adapted to be coupled to the database means to perform a database access in order to perform a radio network optimisation function.

## Description

### Field of the invention

The present invention relates to the field of analyzing and optimizing of cellular mobile telecommunications networks, and more particularly without limitation, to radio network optimization and network planning.

### Background and prior art

Network planning for a cellular mobile telecommunications network, such as the GSM or UMTS systems, is a complex task. "The GSM System for Mobile Communications" written and published by M. B. Pautet and M. Mouly, 1992 edition, provides an overview concerning the considerations for network planning.

US patent 5,960,352 shows a multilayer cellular mobile radio network with optimized frequency re-use plan and a method of optimizing frequency use when adding any microcell base station defining a given microcell that is part of a coverage area of a given macrocell which includes the step of allocating to said microcell a control frequency identical to a traffic frequency used in a macrocell immediately adjacent said given macrocell.

From WO 92 / 21182 a method is known for optimizing a mobile radio network which is in service, together with a device intended for this. According to that method, it is determined whether an error exists in the network, by monitoring the mobile radio network with an operations and maintenance center. If an error occurs, actual data is retrieved from the mobile radio network in order to calculate nominal data for optimizing the parameter settings in the mobile radio network. The device for carrying out this method is the operations and maintenance center itself.

Australian patent AU-A-20078 / 97 shows a method for optimising a mobile radio network. In accordance with this proposal a control loop is constructed which contains the operations and maintenance center (OMC) and the processor-controlled device (NPT), which is basically intended for the planning of radio networks. According to this proposal the device, which is a so-called Network Planning Tool, is thereby used as a network optimisation tool.

From the prior art planning solutions for specific capacity, coverage and business needs of a cellular mobile telecommunications network are known. For example the A 956 RNO network optimisation tool chain which is commercially available from Alcatel can be utilized for such purposes. Among other things, this tool has the ability to determine the geometric contours of cells by using polygons (referred to as "Voronoi" polygons). A variety of other radio network optimisation (RNO) tools is available from other companies.

A common disadvantage of prior art RNO tools is that such tools are provider specific. A cellular telecommunication system, like a GSM or UMTS system, has a number of cells, where each cell is related to network elements which come from a specific provider. While the network elements of a given cell usually come from a single provider this is not the case for the whole telecommunication network. For example the network elements of a first set of cells are provided from Alcatel while the network elements of a second set of cells within the same telecommunication network are provided from another company.

The company specific network elements differ as far as the data structure and format of radio resource configuration parameters and quality of service (QoS) indicators are concerned. This is why state of the art radio network tools are company specific, i.e. it is only possible to carry out a radio network optimisation function with respect to cells being equipped with network elements of a single supplier. This is a serious drawback of prior art RNO tools as it complicates the task of radio network optimisation. Moreover radio network optimisation is limited by the constraint that for a given radio network optimisation function only cells can be selected which come from the same supplier.

For example, a RNO tool like the A 956 RNO tool of Alcatel, enables to manage radio parameters, tuning of radio parameters and managing the quality of service (QoS). The RNO tool provides QoS and traffic data to monitor the mobile network; typically such data measurements are performed daily for each cell of the mobile network along with network and cell parameters. An RNO tool collects data from several sources:
- the OMC-R (operational values of the BSS mobile network part),
- the planning tool,
- The QOS storage tool connected to RNO and from which are retrieved on the fly counters and indicators values".

RNO tool supports the network optimizer with any function to evaluate and correlate all the imported data for each cell of the BSS network. Thus it helps to detect QoS degradation much faster and to propose immediately appropriate correction tasks and an improved logical configuration for the radio network. By processing the collected data, it provides several functionalities in order to ease the work of a network optimizer such as:
- QoS handling:
   monitoring QoS indicators. It is possible to identify the worst or best cells related to a QoS indicator, to get reports on the QoS evolution and to compare the quality of service of different cells. Comparing QoS-indicator values with predefined thresholds, RNO allows a very fast check of the quality of service in each cell.
- QoS problem diagnosis:
   help in investigating QoS weakness causes. It is either possible to use a predefined diagnosis or to create its own diagnosis in order to evaluate the QoS problem causes.
- cartographical views (geographical maps) and analyses:
   RNO enables to display geographical views of the network that are a great help to the operator. Furthermore, RNO computes and displays the area covered by each cell and can do basic cartographic analyses.
- radio resource configuration handling:
   comparison between operational parameter values and planned values (i.e., coming from a planning tool or task) or reference values provided either by a telecom standard (GSM, GPRS, UMTS, ...) or telecom experts (according to expert rules). The operational values are stored in the RNO database in order to be able to study the evolution of these values and to correlate it with the QoS evolution for instance.
- radio parameter tuning:
   after having studied the network thanks to the RNO functions (QoS or radio resource configuration monitoring, checking, diagnosis), the optimizer can use the RNO tuning function for tuning the radio configuration, in order to correct a network misbehavior or to optimize the radio resource of the QoS. The RNO user can define radio-resource-configuration modifications and propose them to the OMC that can apply them to the BSS (in GSM) or to the RNS (in UMTS). Note that it is also possible to tune cells neighborhood with the help of the geographical representation (and with a cost criterion). It is therefore very easy to quickly detect useless neighbors. It is also possible to tune cell frequencies.

RNO tool can be easily used through a convenient MMI. All actions are simply accessible through menus. Data and optimization results are presented not only in well-arranged tables but moreover in geographical maps where applicable or in graphical views (diagrams, curves, ...).

RNO is designed in a way to be as flexible as possible to users' specific needs. For that purpose the RNO administrator can customize the previously mentioned functions. For example he can define and modify logical-parameter reference values, logical-parameter checking rules, diagnosis scenarios, QoS reports and QoS thresholds.

It is an object of the present invention to provide an improved radio network optimisation system and an improved method and computer program product for radio network optimisation.

### Summary of the invention

The present invention provides for an improved radio network optimisation system which enables to perform radio network optimisation functions for a set of cells having network elements coming from more than one supplier. Further the invention provides for a corresponding telecommunication system featuring improved radio network optimisation and a corresponding method and computer program product.

In accordance with the present invention the supplier specific radio resource configuration parameters and / or quality of service indicators are captured by means of a data model. The data model is implemented in a database, preferably in a relational database such as an oracle database. The radio resource configuration parameters and / or quality of service indicators from the multi supplier telecommunication network are inputted into this database Preferably, in case of QOS, values of counters and indicators are retrieved from a dedicated tool connected to RNO.

An RNO tool is coupled to the database in order to access the data which is required for a given radio network optimisation task involving a user selected set of cells. It is a particular advantage of the present invention that the user is not restricted in his or her selection of the cells to be covered by the radio network optimisation task as far as the suppliers of the network elements used in the cells are concerned.

Preferably a radio network optimisation system of the present invention provides the same functionalities and the same man machine interface (MMI) as prior art radio network optimisation tools, such as the A956 RNO tool of Alcatel, but without putting a restriction on the user as far as the selection of cells is concerned, i.e. a user is enabled to select a set of cells on which the radio network optimisation task is to be performed irrespective of the suppliers of the network elements of the cells. In other words, a selected set of cells can comprise different types of cells, i.e. cells having technical differences due to different supplier designs.

In accordance with a further preferred embodiment of the invention the radio network optimisation system can also handle data provided by different types of operation and maintenance centers Radio (OMC-Rs) of a variety of suppliers.

In accordance with a further preferred embodiment of the invention the data model comprises attributes for the type of cell coverage, frequency range and type of handover and / or further cell type attributes.

### Brief description of the drawings

In the following preferred embodiments of the invention will be described in greater detail by making reference to the drawings in which:
- Figure 1: is a block diagram of a telecommunications system comprising a radio network optimisation system,
- Figure 2: is illustrative of a flowchart for performing data acquisition and radio network optimisation,
- Figure 3: shows an example for a data model for capturing multi supplier radio resource configuration.

### Detailed description

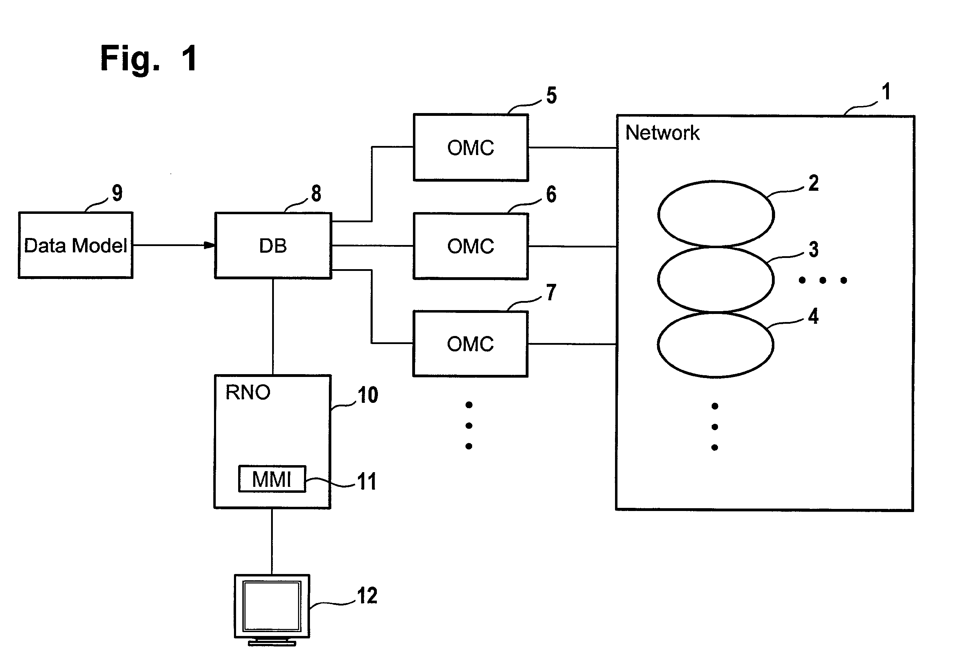

Figure 1 shows a cellular mobile telecommunication network 1 which has a plurality of cells 2, 3, 4, ... Each of the cells has network elements coming from a specific supplier. The supplier determines the type of the cell. For example, the network elements for cell 2 have been delivered by Alcatel, the network elements of cell 3 have been delivered by a second company and the network elements of cell 4 have been delivered by a third company. Each of the companies has its own proprietary radio resource configuration parameter and quality of service indicator formats.

A number of operation and maintenance centers (OMCs) 5, 6, 7, ... are connected to the network 1. The OMCs are also company specific, i.e. a given OMC can only handle a company specific proprietary radio resource configuration parameter and quality of service indicator format. For example the OMC 5 handles the data acquisition of configuration parameters and indicators for cell 2 and other Alcatel provided cells of the network 1, whereas OMC 6 handles data from cell 3 and other cells of the second company of the network 1. Likewise OMC 7 handles data for cell 4 and other cells of the third company of the network 1.

Further there can be various versions of OMCs (releases) of the same company in order to handle various versions of network elements.

The data which is acquired by the OMCs 5, 6, 7, ... is inputted into the database 8. Database 8 implements a data model 9 which captures the company specific proprietary radio resource configuration parameters and quality of service indicators. This way all the data provided by the OMCs 5, 6, 7, ... can be stored in the same database 8.

The RNO tool 10 is coupled to the database 8. The RNO tool 10 has a man machine interface (MMI) 11 and is coupled to a monitor 12.

By means of the MMI 11 a user can select one or more of the cells 2, 3, 4, ... to perform a user selected radio network optimization task. In response to a corresponding user request the RNO tool 10 performs an access operation to database 8 in order to read the radio resource configuration parameters and / or quality of service indicators being related to the selected set of cells and being required to perform the radio network optimization task.

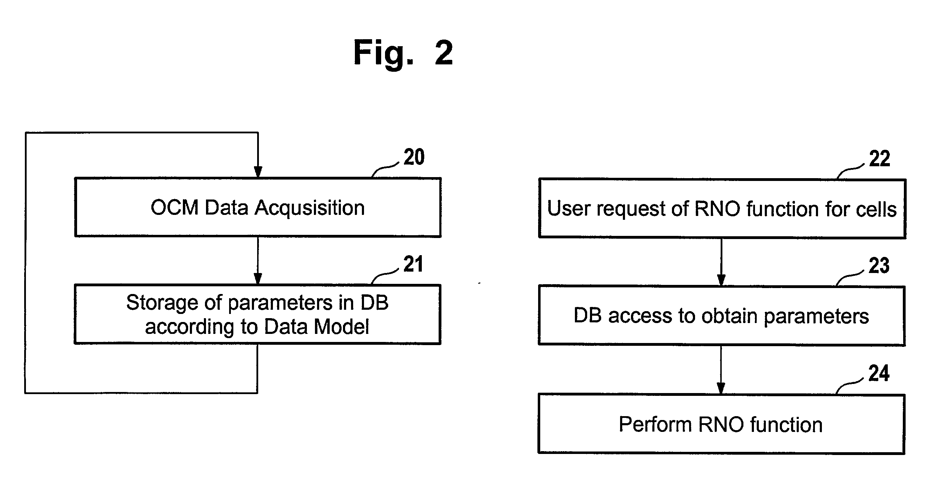

Figure 2 shows a corresponding flowchart.

In step 20 radio resource configuration parameters and quality of service indicators are acquired and provided by the OMCs (for counters and indicators the values are stored in dedicated QOS tool connected to RNO). In step 21 the corresponding data is stored in the database according to the data model. This process is repeated at certain time intervals in order to update the data.

Independently of this data acquisition process of steps 20 and 21 the user can request a radio network optimization function for a user selected set of cells in step 22. In response a database access operation is performed in step 23 to obtain the required parameter and indicator data to perform the requested radio network optimization function. In step 24 the radio network optimization function is carried out and a result is displayed on the monitor.

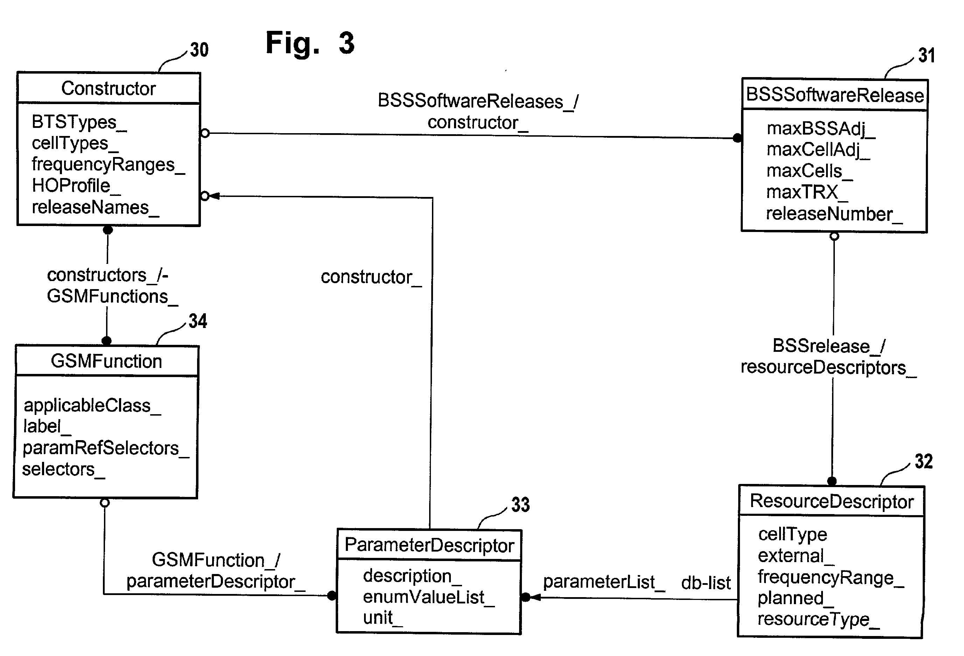

Figure 3 is illustrative of an example for a data model (cf. data model 9 of figure 1).

The data model of figure 3 has a constructor entity 30 to provide attributes like BTSTypes_, cellTypes_, frequencyRanges_, HOProfile_, releaseNames_.

For example the attribute "cellTypes_" specifies whether the cell is for indoor coverage.

Further there is a BSS software release entity 31 providing the attributes maxBSSAdj_, maxCellAdj_, maxCells_, maxTRX_, release Number_. By means of these attributes features of the BSS software release are specified.

Further there is a resource descriptor entity 32 having the attributes cellType_, external_, frequencyRange_, planned_, resourceType_. By means of these attributes the parameters are further specified.

Parameter descriptor entity 33 has attributes description_, enumValueList_, unit_ in order to specify individual parameters.

GSM function entity 34 has attributes applicableClass_, label_, paramRefSelectors_, selectors_. This way attributes for standardized GSM functions are provided.

### List of reference numerals

- network: 1
- cell: 2
- cell: 3
- cell: 4
- OMC: 5
- OMC: 6
- OMC: 7
- database: 8
- data model: 9
- RNO tool: 10
- MMI: 11
- Monitor: 12
- Constructor entity: 30
- BSS Software Release entity: 31
- resource descriptor entity: 32
- parameter descriptor entity: 33
- GSM function entity: 34

## Claims

1. A radio network optimisation system for a cellular telecommunication system (1), the cellular telecommunication system having at least first and second types of cells (2, 3, 4), the radio network optimisation system comprising:
- means for inputting (8) of a first type of data comprising radio resource configuration parameters and / or quality of service indicators of the first type of cell and of a second type of data comprising radio resource configuration parameters and / or quality of service indicators of the second type of cell,
- database means (8) implementing a data model (9) of the at least first and second types of data, the database means being adapted to be coupled to the means for inputting of the first and second types of data,
- a radio network optimisation tool (10) being adapted to be coupled to the database means to perform a database access in order to perform a radio network optimisation function.

2. The radio network optimisation system of claim 1, the means for inputting being adapted to be coupled to at least first and second types of operation and maintenance centers (5, 6, 7).

3. The radio network optimisation system of claim 1 further comprising a user interface (11, 12) to enable a user to select a set of first and / or second types of cells to perform a radio network optimisation function.

4. The radio network optimisation system of claim 1, the data model having a type entity, the type entity having one or more of the following attributes:
- type of cell coverage,
- frequency range,
- type of handover.

5. A cellular telecommunication system comprising:
a) at least first and second types of cells (2, 3, 4,...)
b) a radio network optimisation system comprising:
- means for inputting (8) of a first type of data comprising radio resource configuration parameters and / or quality of service indicators of the first type of cell and of a second type of data comprising radio resource configuration parameters and / or quality of service indicators of the second type of cell,
- database means (8) implementing a data model (9) of the at least first and second types of data, the database means being adapted to be coupled to the means for inputting of the first and second types of data,
- a radio network optimisation tool (10) being adapted to be coupled to the database means to perform a database access in order to perform a radio network optimisation function.

6. The cellular telecommunication system of claim 5 the means for inputting being adapted to be coupled to at least first and second types of operation and maintenance centers (5, 6, 7).

7. The cellular telecommunication system of claim 5, further comprising a user interface (11, 12) to enable a user to select a set of first and / or second types of cells to perform a radio network optimisation function.

8. The cellular telecommunication system of claim 5, the data model having a type entity, the type entity having one or more of the following attributes:
- type of cell coverage,
- frequency range,
- type of handover.

9. A method for radio network optimisation for a cellular telecommunication system, the cellular telecommunication system having at least first and second types of cells, the method comprising the steps of:
- acquiring of a first type of data comprising radio resource configuration parameters and / or quality of service indicators of the first type of cell and of a second type of data comprising radio resource configuration parameters and / or quality of service indicators of the second type of cell,
- storing of the first and second types of data in database means implementing a data model of the at least first and second types of data,
- accessing the database means to perform a radio network optimisation function with respect to a set of the first and / or second types of cells.

10. A computer program product, such as a digital storage medium, comprising program means to perform the steps of:
- acquiring of a first type of data comprising radio resource configuration parameters and / or quality of service indicators of the first type of cell and of a second type of data comprising radio resource configuration parameters and / or quality of service indicators of the second type of cell,
- storing of the first and second types of data in database means implementing a data model of the at least first and second types of data,
- accessing the database means to perform a radio network optimisation function with respect to a set of the first and / or second types of cells.
